# EUROPEAN PATENT APPLICATION

(11) **EP 1 950 921 A2**
(43) Date of publication of application: **30.07.2008**
(21) Application number: 08000940.0
(22) Date of filing: 18.01.2008
(51) Int. Cl.: H04L 12/58, H04Q 7/22

(54) **Text messaging with a mobile terminal**

(30) Priority: 29.01.2007 KR 20070008922
(71) Applicant: Samsung Electronics Co., Ltd., Suwon-si, Gyeonggi-do (KR)
(72) Inventor: Park, Sae Hoon, Suwon-si Gyeonggi-do (KR); Song, Seong Kyu, Suwon-si Gyeonggi-do (KR); Youn, Myeon Kee, Suwon-si Gyeonggi-do (KR)
(74) Representative: Boakes, Jason Carrington

(57) **Abstract**

A text messaging apparatus and method for a mobile terminal includes: transmitting a text message having a context identification number from a first mobile terminal to a second mobile terminal; receiving a response text message from the second mobile terminal in response to the text message, the response text message having a context identification number identical to that of the first text message; extracting the context identification number from the response text message; retrieving text messages linked to the context identification number; and displaying the response text message together with the retrieved text messages.

## Description

### CLAIMS OF PRIORITY

This application makes reference to, incorporates the same herein, and claims all benefits accruing under 35 U.S.C. §119 from an application for *TEXT MESSAGING APPARATUS AND METHOD FOR MOBILE TERMINAL* earlier filed in the Korean Intellectual Property Office on 29 January 2007 and there duly assigned Serial No. 2007-0008922.

### BACKGROUND OF THE INVENTION

### Field of the Invention

The present invention relates to a mobile terminal and, more particularly, the present invention relates to a text messaging apparatus and method for a mobile terminal that facilitates effectively managing text messages in a text message exchange context.

### Description of the Related Art

With the widespread proliferation of mobile terminals, a messaging service has become one of the most popular mobile services. A Short Message Service (SMS) is the first text messaging technology that enables sending and receiving messages between mobile terminals, and many different kinds of messaging services, such as a multimedia messaging service, have been developed for overcoming the drawbacks of the SMS.

In these kind of text messaging services, a mobile user types an SMS text message using a keypad of the mobile terminal, inputs a phone number of the recipient, and then clicks a certain option on the screen, such as "send" or "OK", to send the SMS text message. When the recipient mobile terminal receives the SMS text message, it identifies the SMS message by the phone number as a primary key and notifies the user by generating a sound or vibrating.

In the conventional text messaging services, however, a response message has no clue as to the content of the transmitted message, such that the sender may not recognize which message is the transmitted message matching the response message when a plurality of messages are transmitted before receiving the response message.

For example, when a sender has sent several SMS messages having different contents to a recipient and received one response message from the recipient, the sender may not recognize which one is the original message of the response message. In order to find a message matching the response message, the sender must enter an outbox directory of the mobile terminal and check the contents of the previously transmitted messages. In a worst case scenario, the sender may forget transmitting the messages and thus feel upset with an expected content of the received message.

The problem becomes more complicated when the sender has transmitted a message to a group or transmits multiple messages having different contents to a plurality of different recipients and has received response messages from the different recipients.

In order to solve this problem, a text chat messaging service can be considered. However, it is difficult to introduce the text chat messaging service in a mobile communication system, due to the limits of screen size and storage of a current mobile terminal, and communication costs. Although the text chat messaging service can be implemented with the mobile communication system, highly complicated processes for identifying members joined in a chat and distinguishing their texts may increase the manufacturing cost of the mobile terminal.

Furthermore, when the transmitted messages are not stored in the sender's mobile terminal, the sender must connect to a message center for checking the transmitted messages, resulting in the generation of redundant traffic. The above problems of the conventional messaging service make the SMS messaging service unsuitable for commercial usage.

### SUMMARY OF THE INVENTION

The present invention has been made in an effort to solve the above-noted problems, and it is an object of the present invention to provide a text messaging apparatus and method for a mobile terminal that facilitate effectively managing text messages using a context tracking.

It is another object of the present invention to provide a text messaging apparatus and method for a mobile terminal that facilitate tracking a context of message by assigning a unique identifier to the message.

It is another object of the present invention to provide a text messaging apparatus and method for a mobile terminal that facilitate effectively processing text messages using identifiers attached to the text messages.

It is another object of the present invention to provide a text messaging apparatus and method for a mobile terminal that facilitate presenting stored messages having an identifier identical with that of a currently received text message.

It is another object of the present invention to provide a text messaging apparatus and method for a mobile terminal that facilitate presenting a content of a currently received message together with a content of a transmitted message matching the currently received message by checking an identifier assigned for a context, i.e. the messages stored in a local directory with the identifier.

In accordance with one aspect of the present invention, the above and other objects are accomplished by a text messaging method for a mobile communication system for supporting text message communication among mobile terminals. The text messaging method includes: transmitting a text message having a context identification number from a first mobile terminal to a second mobile terminal; receiving a response text message from the second mobile terminal in response to the text message, the response text message having a context identification number identical to that of the first text message; extracting the context identification number from the response text message; retrieving text messages linked to the context identification number; and displaying the response text message together with the retrieved text messages.

In accordance with another aspect of the present invention, the above and other objects are accomplished by a method for transmitting a text message for a mobile terminal. The method for transmitting a text message includes: preparing a text message in accordance with user inputs; determining whether a context tracking function has been enabled; generating a context identification number in response to a context tracking function being enabled; inserting the context identification number into a predetermined region of the text message; and transmitting the text message to a target mobile terminal.

In accordance with still another aspect of the present invention, the above and other objects are accomplished by a method for receiving a text message for a mobile terminal. The method for receiving a text message includes: detecting a reception of a text message; determining whether a context identification number is contained within the text message; retrieving text messages linked to the context identification number from a local directory in response to a context identification number being contained in the text message; and displaying the received text message together with the retrieved text messages.

In accordance with yet another aspect of the present invention, the above and other objects are accomplished by a mobile terminal. The mobile terminal includes: a radio frequency unit to support text message communication with other mobile terminals; a memory unit to store application programs for operating functions of the mobile terminal, text messages exchanged with other mobile terminals, and configuration information of a context tracking function; a control unit to assign a context identification number to an outbound text message and to track a text exchange context using a context identification number contained within an inbound text message.

### BRIEF DESCRIPTION OF THE DRAWINGS

A more complete appreciation of the present invention, and many of the attendant advantages thereof, will be readily apparent as the present invention becomes better understood by reference to the following detailed description when considered in conjunction with the accompanying drawings in which like reference symbols indicate the same or similar components, wherein:

FIG. 1 is a schematic diagram of a configuration of a communication network supporting a text messaging apparatus and method for a mobile terminal according to an exemplary embodiment of the present invention;

FIG. 2 is a block diagram of a configuration of a mobile terminal which has adopted the text messaging apparatus and method according to an exemplary embodiment of the present invention;

FIG. 3 is a flowchart of a text exchange procedure between two mobile terminals in a text messaging method according to an exemplary embodiment of the present invention;

FIG. 4 is a diagram of a format of a Packet Data Unit (PDU);

FIGs. 5A and 5B are respective diagrams of the format of a PDU and the structure of a TID field of the PDU according to an exemplary embodiment of the present invention;

FIG. 6 is a diagram of a text message display process in a text messaging method;

FIG. 7 is a diagram of a text message display process of a text messaging method according to an exemplary embodiment of the present invention;

FIG. 8 is a flowchart of a text message transmission procedure of a text messaging method for a mobile terminal according to an exemplary embodiment of the present invention; and

FIG. 9 is a flowchart of a text message reception procedure of a text messaging method for a mobile terminal according to an exemplary embodiment of the present invention.

### DETAILED DESCRIPTION OF THE INVENTION

Exemplary embodiments of the present invention are described in detail below with reference to the accompanying drawings. The same reference numbers are used throughout the drawings to refer to the same or like parts. Detailed descriptions of well-known functions and structures incorporated herein have been omitted to avoid obscuring the subject matter of the present invention.

Certain terminologies are used in the following description for convenience and reference only and are not limiting. In the following detailed description, only the exemplary embodiments of the present invention have been shown and described, simply by way of illustration of the best mode contemplated by the inventor of carrying out the present invention. As will be realized, the present invention is capable of modification in various obvious respects, all without departing from the scope of the present invention. Accordingly, the drawings and description are to be regarded as illustrative in nature and not restrictive.

In the text messaging apparatus and method, a received message is presented together with previously exchanged messages in a context assigned an identifier. The identifier is used for identifying the messages exchanged in the same context and is called a Tracking IDentification (TID) number, in the present invention.

In the present invention, an outward bound message is associated with inbound messages having a same TID number for a subject of the messages. That is, the received messages can be distinguished on the basis of the TID number assigned for a subject. When a message is received, the system retrieves the messages having the same TID number from a local directory such that the received message is displayed together the exchanged messages with the same TID.

To simplify the explanation, all kinds of messages generated in the mobile terminals are called "text message." The text messages includes Short Message Service (SMS), Multimedia Message Service (MMS), and electronic mail (e-mail) messages, and their equivalents.

In the following embodiments, a mobile terminal represents communication devices based on the various kinds of communication standards.

The mobile terminal includes a Personal Digital Assistant (PDA), a laptop computer, a Smartphone, a 3^{rd} Generation (3G) standard mobile terminal, a Code Division Multiple Access (CDMA) terminal, a Global System for Mobile communication (GSM) terminal, a Global Packet Radio Services (GPRS) terminal, a Wireless Local Area Network (WLAN) terminal, a Wireless Broadband (WiBro) Terminal, and a High Speed Downlink Packet Access (HSDPA) terminal, and their equivalents.

In the following embodiments, how to assign the TID number, how to manage a local directory, and how to display relevant messages are described. The context tracking mechanism of the present invention is implemented by assigning TID numbers to the messages at the software level without modification of conventional application message formats.

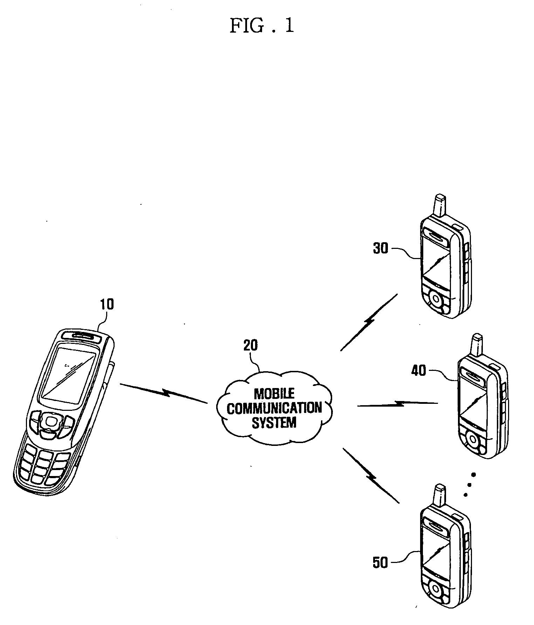

FIG. 1 is a schematic diagram of a configuration of a communication network supporting a text messaging apparatus and method for a mobile terminal according to an exemplary embodiment of the present invention.

Referring to FIG. 1, the communication network includes a plurality of mobile terminals 10, 30, 40, and 50, and a mobile communication system 20 for relaying messages exchanged between the mobile terminals 10, 30, 40, and 50. In this embodiment, it is assumed the mobile terminal 10 is a sending mobile terminal which firstly transmits messages and the mobile terminals 30, 40, and 50 are recipient mobile terminals that respond to the sending mobile terminal 10.

The sending mobile terminal 10 and the first to third recipient mobile terminals 30, 40, and 50 can receive voice and other various data communication services from the mobile communication system 20.

The sending mobile terminal 10 and the recipient mobile terminal 30, 40, and 50 are denoted only to help understanding the present invention, and have the same structures and functions.

The sending mobile terminal 10 generates a text message and sends the text message in accordance with a user command. The sending mobile terminal 10 determines if a context tracking function (for example, TIP function) is enabled and assigns, if the context tracking function is enabled, a TID number. After leaving the sending mobile terminal, the text message reaches the mobile communication system 20. The TID structure and message format will be described later.

When receiving a text message, the sending mobile terminal checks whether a TID number is contained in the received message and retrieves, if a TID number is contained, messages in the context of the TID number. That is, if a TID number is contained in the received message, the sending mobile terminal 10 retrieves messages having the same TID number from a local directory. If messages having the same TID are retrieved, the sending mobile terminal 10 presents the received message on a display together with the retrieved messages in accordance with a user command or a preset context message display configuration. The message presentation procedure will be described later.

If a text message has been received, the mobile communication system 20 checks a recipient phone number attached to the text message and transmits the text message to a corresponding recipient mobile terminal (in this embodiment, at least one of the recipient mobile terminals 30, 40, and 50). In the same manner, the mobile communication system 20 relays response text messages from the recipient mobile terminals 30, 40, and 50 to the sending mobile terminal 10.

The mobile communication system 20 includes a Base Station (BS), a Base Station Controller (BSC), a Mobile Switching Center (MSC), a Home Location Register (HLR), and a Short Message Service Center (SMSC).

The mobile communication system 20 establishes a network for supporting wireless data communication between the sending and recipient mobile terminals 10, 30, 40, and 50. That is, the mobile communication system 20 establishes communication channels between the sending and recipient mobile terminals 10, 30, 40, and 50 in accordance with a specific communication standard adopted. The mobile communication system 20 provides the mobile terminals 10, 30, 40, and 50 with test messages and multimedia communication services.

The communication channel can be established on the basis of various multiple access schemes, such as a Code Division Multiple Access (CDMA), a Frequency Division Multiple Access (FDMA), a Time Division Multiple Access (TDMA), a Wideband Code Division Multiple Access (WCDMA), and an Orthogonal Frequency Division Multiple Access (OFDMA).

If at least one of the recipient mobile terminals 30, 40, and 50 receives a text message from the sending mobile terminal 10, the recipient mobile terminal generates and transmits a response text message to the mobile communication system 20. The TID number of the text message transmitted by the sending mobile terminal 10 is automatically inserted into the response text message.

That is, a recipient mobile terminal extracts the TID number from the text message received from the sending mobile terminal 10 and inserts the extracted TID number into the response text message to be transmitted. Accordingly, when a response text message has been received, the sending mobile terminal 10 can retrieve the message in the context of the TID number from the local directory (for example, an outbox) so as to present the received message together with the transmitted message having the same TID number.

In this embodiment, the communication network includes four mobile terminals and a mobile communication system and the TID number is automatically inserted into the response message. However, the present invention is not limited thereto. For example, the recipient mobile terminal that has received the text message can be configured to insert the TID in accordance with a user command and to retrieve text messages having the TID number extracted from the received message.

For example, when the sending mobile terminal receives a plurality of messages in response to a plurality of text messages transmitted with different TID numbers, the sending mobile terminal enables the user to recognize the transmitted text messages matching the respective response text message. Accordingly, the text messaging apparatus and method of the present invention facilitate effectively managing the text messages.

In the mobile environment, since the traffic is directly associated with the communication cost, to transmit a message with an attachment of an entire message in the context is ineffective. In this embodiment, the TID number is attached to the message as a context index such that a mobile terminal received a text message retrieves the message having the same TID number from its local directory and displays the received message with the transmitted messages in the context of TID number, thereby avoiding the production of redundant traffic.

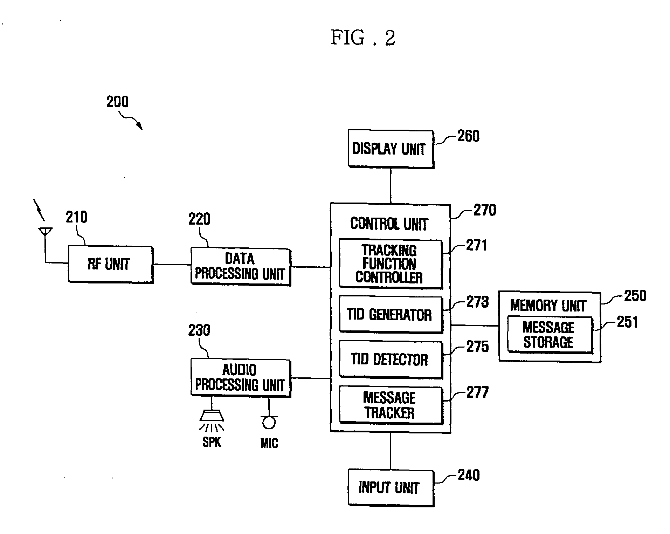

FIG. 2 is a block diagram of a configuration of a mobile terminal which has adopted the text messaging apparatus and method according to an exemplary embodiment of the present invention.

A mobile terminal 200 assigns a TID number to a text message to be transmitted, retrieves messages matching the received text message in the context of the TID number of the received text message when a message has been received, and automatically inserts a TID when responding to a received message.

The mobile terminal 200 includes a Radio Frequency (RF) unit 210, a data processing unit 220, an audio processing unit 230, an input unit 240, a memory unit 250, a display unit 260, and a control unit 270. The memory unit 250 includes message storage 251 which stores previously transmitted text messages together with respective TID numbers in the form of a local directory (for example, outbox). The control unit 270 includes a tracking function controller 271, a TID generator 273, a TID detector 275, and a message tracker 277.

In FIG. 2, the RF unit 210 is responsible for processing transmitted and received radio energy. For example, the RF unit 210 establishes radio connection with the mobile communication system for transmitting and receiving data, such as texts and still pictures and motion pictures. The RF unit 210 includes an RF transmitter for up-converting a baseband signal into an RF signal and amplifying the RF signal for transmission, and an RF receiver for low noise amplifying an RF signal received through an antenna and down-converting the RF signal into a baseband signal.

The data processing unit 220 is responsible for processing voice data input from the audio processing unit 230, user data such as alphanumeric data input from the input unit 240, and text message data received and to be transmitted through the RF processing unit 210. The data processing unit 220 includes a transmission portion for encoding and modulating the signal to be output through the RF unit 210, and a reception portion for demodulating and decoding the signal received through the RF unit 210. The data processing unit 220 can be implemented with a modem and codec. The codec can include a data codec for processing packet data and an audio codec for processing audio data including voice.

The audio processing unit 230 is responsible for converting a digital audio signal received from the data processing unit 220 into an analog audio signal and outputting analog audio signal through a speaker (SPK) as an audible sound wave, and converting a sound wave input through a microphone (MIC) into analog audio signal and then converting the analog audio signal into digital audio signal for the data processing unit 220.

The input unit 240 is responsible for receiving user data, such as alphanumeric data and user commands for executing a configuration and functions of the mobile terminal. The input unit 240 can incorporate a touchpad or a keypad in accordance with the configuration of the mobile terminal 200.

The input unit 240 can further include a set of navigation keys, volume keys, and other hot keys for supporting additional functions. Particularly, the input unit 240 is implemented to be able to generate signals for composing the text message and activating the TID function.

The memory unit 150 stores an operating system and application programs (for example, a context tracking application) and application data (including the text messages) generated while operating the application programs. The memory unit 250 includes message storage 251 for the text messages with the TID number in the form of a local directory.

The display unit 260 has a screen presenting an operation status of currently running application, for example, communication status screen, text message screen, menu screen, still picture screen, motion picture screen, user key input status screen, and user configuration screen.

The display unit 260 can be implemented with a Liquid Crystal Display (LCD) having a touchscreen function. In this case, the display unit 260 can operate as an input unit.

The control unit 270 controls general operations of the mobile terminal 200 and cooperation between the internal units of the mobile terminal. That is, the control unit 270 controls cooperative signaling between the data processing unit 220, audio processing unit 230, input unit 240, memory unit 250, display unit 260, and other internal elements. The control unit 270 can incorporate the data processing unit 220.

More particularly, the control unit 270 controls enabling or disabling the context tracking function (for example, TID function) in this embodiment and assigns a TID number to outbound text messages when the context tracking function has been enabled,. The control unit 270 also determines if an inbound message contains a TID number, and tracks the messages in the context of the TID number. The control unit 270 also can control displaying the received text message together with the previously exchanged text messages in the context of the TID number.

In order to track the context of the received text message, the control unit includes the tracking function controller 271, TID generator 273, TID detector 275, and message tracker 277.

The tracking function controller 271 is activated or deactivated according to whether the context tracking function is on or off. The tracking function controller 271 determines, when an outbound text message has been generated or when an inbound text message has been received, if the context tracking functions has been enabled according to a preset configuration of the mobile terminal 200 or a user command.

The TID generator 273 generates a TID number for an outbound text message and inserts the TID number into the outbound text message under the control of the tracking function controller 271 when the context tracking function has been enabled. When the outbound text message is a response text message to a previously received inbound text message, the TID generator 273 inserts the TID number contained in the inbound text message into the outbound text message.

When an inbound text message has been received, the TID detector 275 determines if a TID number has been attached to the inbound text message. Preferably, the PID number is attached at the last 1 Byte of a "Length of SMSC" field of a text message Packet Data Unit (PDU).

When an inbound text message has been received, the message tracker 277 tracks a context of the inbound text message by means of the TID number attached to the inbound text message so as to retrieve text messages having the same TID in the local directory.

As described above, when an inbound text message has been received, the mobile terminal according to an exemplary embodiment of the present invention can track a message exchange context by retrieving text messages having the same TID number attached to the inbound text message such that the mobile terminal displays the inbound text message together with the message exchange context or the previously exchanged text messages in the message exchange context. In order for the context tracking method to completely operate, the text message received in response to a previously transmitted outbound text message also contains a TID number.

With the context tracking mechanism, the mobile terminal displays the text messages transmitted and received in the same message exchange context with reference to a TID number attached to the text messages, resulting in an improvement of messaging service.

When the context tracking function is disabled, the inbound and outbound text messages are not stored in the local directory (for example, outbox). In this case, the TID insertion process is omitted.

In this embodiment, a context tracking-enabled text message, i.e. a text message having the TID number, is preferably distinguished from other normal text messages. The context tracking-enabled text message can be presented with a flag in a message list so as to be distinguished from the normal text messages. For example, a flag "T" is presented with a title or phone number of a context tracking-enabled text message. The flag is not limited to a character, and can be a specific icon or image.

The TID numbers are linked to each other such that the mobile terminal recognizes a previously transmitted text message. Accordingly, the mobile terminal need not store all of the text messages.

In FIG. 2, the configuration of the context tracking-enabled mobile terminal 200 is schematically depicted for simplification of the explanation. However, the present invention is not limited thereto. For example, the mobile terminal 200 can incorporate at least one of a camera module, a Bluetooth module, or a digital broadcast receiver module.

Operations for exchanging text messages in the context of a TID number, tracking a text message exchange context with reference to the TID, and displaying the text message in the text message exchange context, are described hereinafter. Also, a text message and TID formats for use in the text messaging apparatus and method of the present invention are described.

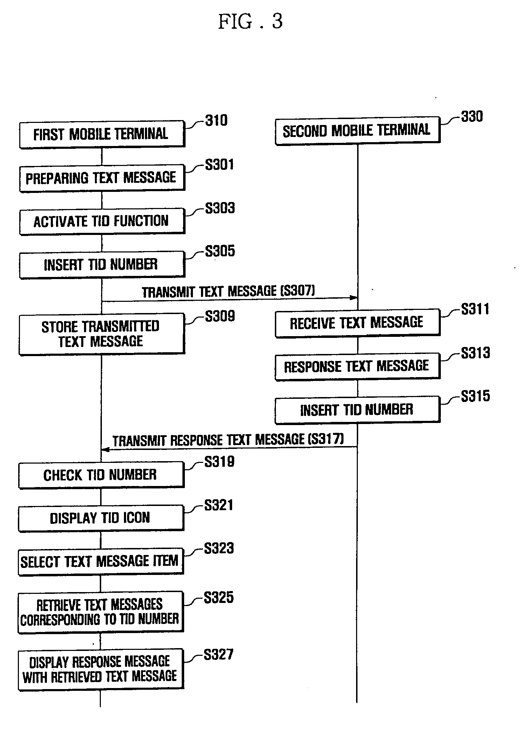

FIG. 3 is a flowchart of a text exchange procedure between two mobile terminals in a text messaging method according to an exemplary embodiment of the present invention.

In FIG. 3, a first mobile terminal 310 generates and transmits a message having a TID number and a second mobile terminal 330 generates a response text message with the same TID number and transmits the response text message to the first mobile terminal 310. There can be multiple recipient mobile terminals. However, only one recipient mobile terminal, i.e. the second mobile terminal 330, is depicted in FIG. 3 for simplifying the explanation.

Referring to FIG. 3, the first mobile terminal 310 generates a text message in accordance with a user input (S301). The text message can be generated in the conventional text message creation manner, and accordingly, a description of the text message creation process has been omitted. After generating the text message, the first mobile terminal 310 stores the text message and enables the context tracking function in accordance with a present configuration of the first mobile terminal 310 and assigns a TID number to the text message (S305). The context tracking function can be preset to automatically assigning the TID number to the outbound text message or selectively activated in accordance with a user command whenever a text message is transmitted.

The TID number is a unique context identification number, 1-byte long, that can be applied to the text message (for example, an SMS message) without modification of the conventional message format. That is, the TID number is contained in a user data field of the text message created on the basis of the conventional SMS protocol, but not modifying the SMS protocol or a header of the SMS message. Table 1 shows a message format of typical text message.

**Table 1**

| Octet(s) | Description | Format | In this example |
|---|---|---|---|
| 07 | Length of the SMSC information | Hex-octet | 7 octets |
| 91 | Type of address of SMSC | Hex-octet | International format |
| 13 26 04 00 00 F0 | SMSC number | Decimal semi-octets | 31624000000 |
| 04 | First octet of this SMS-DELIVERY message. | Hex-octet | TP-MMS |
| 0B | Length of the sender address | Hex-octet | 22 (decimal) |
| 91 | Type of address of the sender number | Hex-octet | ... |
| 13 46 61 00 89 F6 | Sender number | Decimal semi-octets | 31641600986 |
| 00 | Protocol identifier | Hex-octet | ... |
| 00 | Data encoding scheme | Hex-octet | ... |
| 20 80 62 91 73 14 08 | Time stamp | Decimal | 06-08-02 |
| | | semi-octet | 29:17:31 |
| 0C | Length of User data (SMS message) | Hex-octet | 12(decimal) |
| C8 F7 1D 14 96 97 41 F9 77 FD 07 | User data | 8-bit octets representing 7-bit data | How are You? |

As shown in table 1, a content of a text message "How are You?" is carried in a user data field of a Packet Data Unit (PDU) in the typical message service (for example, SMS) of a current mobile communication system (for example, a CDMA system). That is, a character string input by the user is contained in the user data field of the PDU.

Also, the typical text message format does not provide any information field for tracking a text message exchange context. In this embodiment, a TID number is inserted in the last I byte of the user data field of the text message format. That is, the last 1 byte of the user data field is reserved for the TID number.

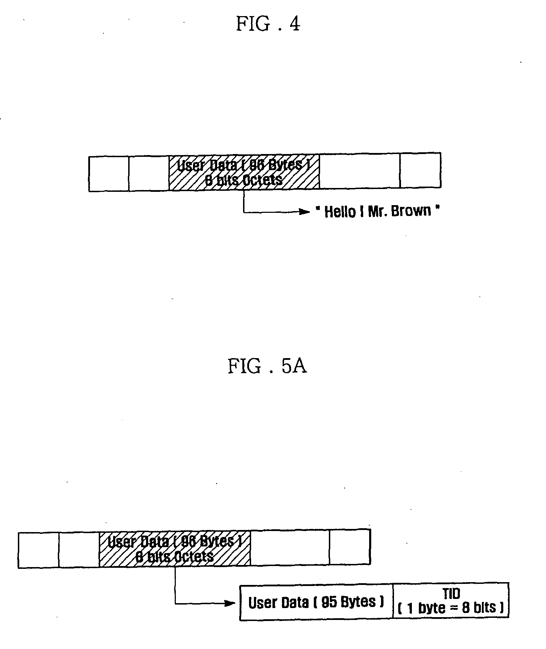

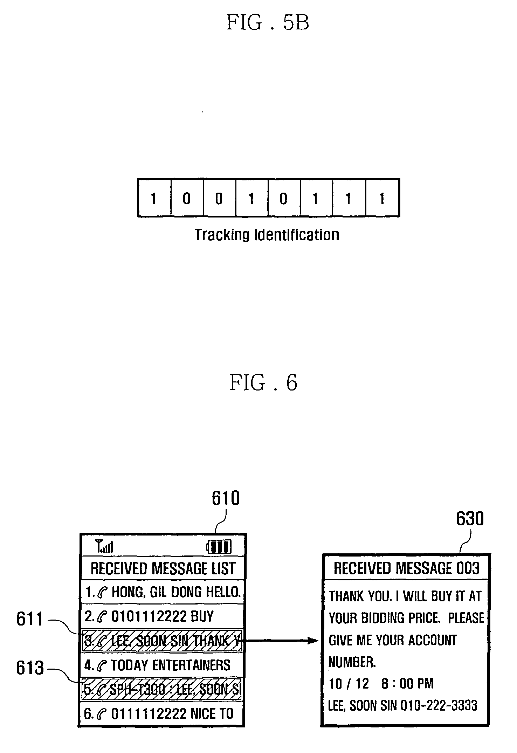

FIG. 4 is a diagram of a format of a packet data unit (PDU), and FIGs. 5A and 5B are respective diagrams of a format of a PDU and a structure of a TID field of the PDU according to an exemplary embodiment of the present invention.

Referring to FIGs. 4, 5A, and 5B, the data that can be held by text message is very limited. One text message can contain at most 40 to 45 characters (80~90 bytes) of data. Thus, data over 80~90 bytes generates an additional cost. In this embodiment of the present invention, 1 byte of the 80~90 bytes of data is reserved for the TID number.

With the last 8 bytes of the data field, a maximum of 512 TID numbers can be generated. In more detail, after obtaining synchronization with a base station, the mobile terminal can assign an ID in accordance with a timeslot. Accordingly, the text message is assigned a 1-byte long TID number which increases as the time progresses. The TID number can have one of 512 values. The transmitted text message is stored in the local directory (for example, outbox) together with the TID number.

In this embodiment, a zero value and 512 of the 512 values are reserved for special purposes, such that a TID number can be a value from 1 to 510. Accordingly, the mobile terminal can assign 510 text messages different TID numbers. However, a number of available TID numbers can be changed in accordance with a type of communication system.

If the recipient, in this embodiment, the second mobile terminal, responds to the first mobile terminal, the TID number contained in the received text message is automatically inserted into the response text message.

Referring to FIG. 3 again, after assigning the TID number, the first mobile terminal 310 transmits the text message to the second mobile terminal 330 and then stores a duplicate of the transmitted message in the local directory (for example, outbox) (S309). The steps S307 and 309 can be interchanged such that the mobile terminal 210 stores the text message in the local directory and then transmits a duplicate of the stored message to the second mobile terminal 330.

The second mobile terminal330 receives the text message transmitted from the first mobile terminal (S311) and generates a response text message in accordance with user input (S313). The second mobile terminal then determines if a TID number is contained in the text message received from the first mobile terminal 310 and automatically inserts, if a TID number is contained in the text message, the same TID into the response text message (S315).

The first mobile terminal 310 inserts the TID number into the last byte of the user data, and the second mobile terminal 330 checks, when a text message is received, the last byte of the text message packet data (for example, SMS PDU) for determining the enablement of the context tracking function. If it is determined that the context tracking function has been enabled, the second message inserts, when responding to the received text message, the same TID number into the response text message. This process is performed in the first mobile terminal 310.

After the TID number has been inserted to the response message, the second mobile terminal transmits the response text message the first mobile terminal 310 (S317). The second mobile terminal 310 can be configured to automatically insert the phone number of the first mobile terminal 330.

Upon receiving the response text message, the first mobile terminal 310 checks the TID number contained in the response text message (S319). As described above, the TID number is inserted in the last one byte of the text message packet data unit (SMS PDU).

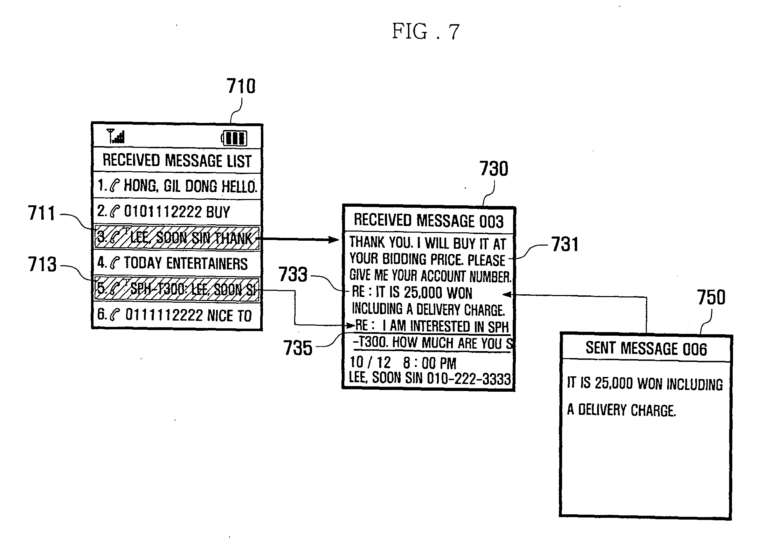

Next, the first mobile terminal 310 displays, if the response text message contains a TID number, on an inbound text message list with a TID icon (S321). That is, the first mobile terminal 310 presents the text message having a TID number, in the inbound text message list, with a flag, such as "T" or a specific icon or an image besides a title or phone number of the received message, so as to distinguish the context tracking-enabled text message from other normal text messages. The inbound text message list according to an embodiment of the present invention is depicted in FIG. 7.

Next, if the response message is selected from the inbound text message list in accordance with a user selection command (S323), the first mobile terminal 310 retrieves at least one outbound text message matching the response message, i.e. the text message having the same TID number of the response message (S325). In more detail, the first mobile terminal 310 retrieves the text messages from the local directory (for example, outbox) in the context of the TID number of the received text message. Accordingly, a plurality of outbound and inbound text messages in the context of the TID number can be retrieved.

Next, the first mobile terminal 310 presents the content of the received text message with the contents of the retrieved text messages (S327). An example of displaying the text messages in a text message exchange context is described later with reference to FIG. 7.

FIG. 6 is a diagram of a typical text message display process in a text messaging method, and FIG. 7 is a diagram of a text message display process of a text messaging method according to an exemplary embodiment of the present invention.

In FIG. 6, reference numeral 610 denotes an inbound text message list screen, reference numerals 611 and 613 denote inbound text message items indicating the text messages received from the same counterpart mobile terminal, and reference numeral 630 denotes a text message screen for presenting, when a text message item has been selected, the content of the selected text message (in this embodiment, the content of the inbound message 611.

As shown in FIG. 6, the text messaging method provides the inbound text message list of which each item shows only a small part of the content of the corresponding inbound message such that it is difficult or impossible to remind the user of a previously transmitted text message matching the received text message. For example, when a text message having a content "Thank you, I will buy it at your bidding price. Please give me your account number" has been received; the user may not remember a value of the bidding price, especially when the user has proposed different prices to multiple buyers.

When a plurality of response messages on a subject have been received from a single counterpart mobile terminal, i.e. from the same phone number, the mobile terminal processes the response messages independently although the received text messages have a relationship in their contents.

In FIG. 7, reference numeral 710 denotes an inbound text message list screen, and reference numerals 711 and 713 denote inbound text message items indication the text messages in a same text exchange context. Reference numeral 730 denotes an inbound text message screen for presenting, when a text message item 711 is selected from the inbound text list screen, a content of the selected text message item 711. Reference numeral 731 denotes the content of the selected text item, reference numeral 733 is a content of the outbound text message transmitted before receiving the inbound text message, and reference numeral 735 is a content of the inbound text message item 713 received before transmitting the outbound text message. Reference numeral 750 is an outbound text message screen showing a content of the outbound text message stored in the local directory and transmitted before receiving the inbound text message having the content 733.

As shown in FIG. 7, each of the inbound text message items 711 and 713 is presented with a flag "T" at top left side of a sender's name so as to be distinguished from other normal text messages. That is, the inbound text message items having the flag "T" indicates the received text message is a context tracking-enabled text message. If a context tracking-enabled inbound text has been selected, the mobile terminal retrieves the outbound text messages having the same TID number as the selected inbound text message from the local directory and then displays the content of the selected inbound text message with the contents of the retrieved outbound text message in the text message screen 730. Accordingly, the user can quickly and effectively recognize the context related to the inbound text message.

Referring to FIG. 7, the text message entitled "outbound message 006" in the outbound text message screen 750 is a message stored in the outbox of a first mobile terminal and transmitted with a specific TID number (for example, TID number=34) to a second mobile terminal registered with a name "Soon Sin Lee." When generating a response text message, the second mobile terminal automatically inserts the same TID number=34 into the response text message and then transmits the response text message to the first mobile terminal. Upon receiving the response text message, the first mobile terminal stores the response text message as an "inbound message 003," and the response text message is registered in the inbound text message list as an inbound text message item 711 as shown in the inbound text message list screen 710. If the inbound message item 711 has been selected from the inbound text message list, the first mobile terminal retrieves the outbound text messages having the TID number=34 from the outbox and displays the content of the inbound text message with the content of the retrieved outbound text message as shown in the inbound text message screen 730.

That is, if an inbound text message is selected, the mobile terminal retrieves the outbound text message matching the selected inbound text message in the context of the TID number and displays the inbound text message together with the retrieved outbound text message. When the first mobile terminal transmits a replay in response to inbound text message, the first mobile terminal may assign a new TID number and establishes a link between the old and new TID numbers. That is, a TID number can be assigned for multiple outbound and inbound text messages and a TID number can be linked to another TID number.

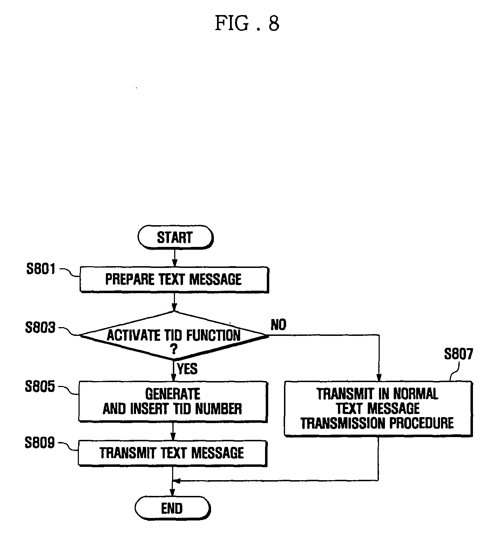

FIG. 8 is a flowchart of a text message transmission procedure of a text messaging method for a mobile terminal according to an exemplary embodiment of the present invention.

Referring to FIG. 8, a mobile terminal generates a text message in accordance with a user input (S801) and determines whether a context tracking function (TID function) has been enabled (S803).

If the context tracking function is disabled, the mobile terminal transmits the text message according to a normal message processing manner (S805). In contrast, if the context tracking function has been enabled, the mobile terminal generates a TID number and inserts the TID number into the text message (S807).

The mobile terminal then transmits the text message having the TID number to a target mobile terminal. The text message can be transmitted to multiple target mobile terminals.

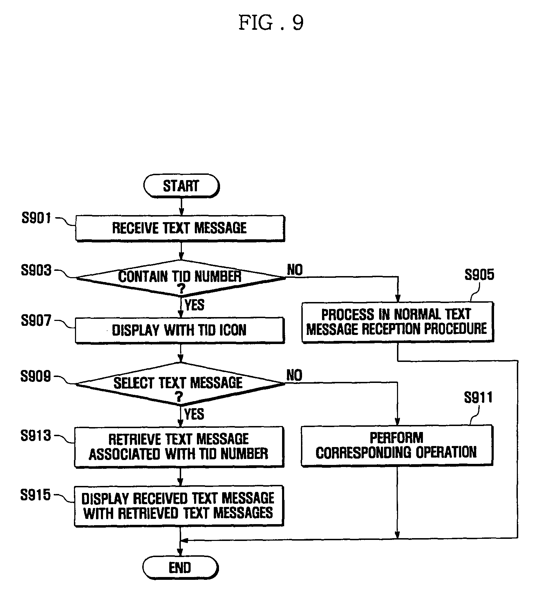

FIG. 9 is a flowchart of a text message reception procedure of a text messaging method of a mobile terminal according to an exemplary embodiment of the present invention.

Referring to FIG. 9, a mobile terminal receives a text message(S901). After a text message has been received, the mobile terminal determines whether the received text message contains a TID number (S903).

If the received text message does not contain a TID number, the mobile terminal processes the text message in a normal test message processing procedure (S905).

In contrast, if the received text message contains a TID number, the mobile terminal presents an inbound text message item corresponding to the received text message in an inbound text message list with a TID icon.

Next, the mobile terminal detects a user command for selecting an inbound text message item from the inbound text message list and determines whether the selected inbound text message item has a TID icon (S909). If the selected inbound text message item has no TID icon, the mobile terminal processes the selected text in a normal text message processing procedure (S911). For example, the mobile terminal displays the text message corresponding to the selected inbound text message item in a normal message presentation manner.

In contrast, if the selected text message item has a TID icon, the mobile terminal retrieves the text messages having a TID number identical with that of the inbound text message corresponding to the selected text message item from a local directory (S913). Next, the mobile terminal displays the content of the inbound text message together with the contents of the retrieved text messages (S915).

The retrieved text messages can include inbound and outbound text messages exchanged before the selected inbound text message has been received. The mobile terminal retrieves the text message having the same TID number or linked TID numbers and displays the text messages in a sequential time order.

Although exemplary embodiments of the present invention have been described in detail hereinabove, it should be clearly understood that many variations and/or modifications of the basic inventive concepts herein taught which may appear to those skilled in the present art will still fall within the spirit and scope of the present invention, as defined by the appended claims.

As described above, the text messaging apparatus and method of the present invention is advantageous in user convenience. Since the text messaging apparatus and method of the present invention tracks a message exchange context using a TID number inserted into the text message, it is possible to effectively tracking the text message exchange context without attaching a previously exchanged text message to an outbound text message. Also, since the text message exchange context tracking is performed at a recipient mobile terminal with the text messages stored in the local directory, no redundant traffic is generated for the context tracking, resulting in the elimination of costly waste.

Also, the text messaging apparatus and method of the present invention enable tracking multiple text exchange contexts with multiple counterpart mobile terminals by assigning different TID numbers for the respective text exchange contexts, whereby a user can manage text communications with multiple counterpart users without confusion.

The text messaging apparatus and method improves the utilization of a text message communication even with very limited capacity of the text message, thereby providing the operator with competitive power in the mobile communication market.

The text messaging apparatus and method of the present invention enable providing the text exchange context-based message service by only inserting a TID number into the text message, thereby improving reliability and utilization efficiency of the text messaging service, resulting in an increase of text message use.

## Claims

1. A text messaging method in a mobile communication system, the method comprising:
transmitting a text message having a context identification number from a first mobile terminal to a second mobile terminal;
receiving a response text message from the second mobile terminal in response to the text message, the response text message having a context identification number identical to that of the first text message;
extracting the context identification number from the response text message;
retrieving text messages linked to the context identification number; and
displaying the response text message together with the retrieved text messages.

2. The text messaging method of claim 1, further comprising arranging the text messages linked to the context identification number in a temporal order of generation.

3. The text messaging method of claim 2, wherein the context identification number is inserted into the text message.

4. The text messaging method of claim 2, wherein the context identification number is contained in a last byte of a user data field of the text message.

5. The text messaging method of claim 1, further comprising storing the transmitted text message in a local directory of the first mobile terminal.

6. The text messaging method of claim 5, wherein storing the transmitted text message comprises:
determining whether a context tracking function has been enabled; and
storing the text message by context identification number in response to a context tracking function being enabled.

7. The text messaging method of claim 2, wherein the response text message is assigned a context tracking function icon for distinguishing it from normal text messages

8. The text messaging method of claim 7, further comprising:
determining whether the response text message has a context identification number;
assigning a context tracking function icon to the response text message in response to the response text message having a context identification number; and
displaying the response text message in an inbound text message list with the context tracking function icon.

9. The text messaging method of claim 2, further comprising:
determining if the text message has a context identification number by the second mobile terminal; and
assigning a context identification number to the response text message, the assigned context identification number being associated with the context identification number of the received text message.

10. The text messaging method of claim 2, wherein the context identification number is extracted from a last byte of a user data field of a packet data unit representing the text message.

11. A method of transmitting a text message to a mobile terminal, the method comprising:
preparing a text message in accordance with user inputs;
determining whether a context tracking function has been enabled;
generating a context identification number in response to a context tracking function being enabled;
inserting the context identification number into a predetermined region of the text message; and
transmitting the text message to a target mobile terminal.

12. The method of claim 11, wherein the context identification number is inserted into a user data region of the text message.

13. The method of claim 12, wherein the context identification number is inserted into a last byte of a user data region of the text message.

14. The method of claim 12, further comprising storing the transmitted text message in a local directory.

15. The method of claim 14, wherein the transmitted text message is stored by context identification number.

16. A method of receiving a text message from a mobile terminal, the method comprising:
detecting a reception of a text message;
determining whether a context identification number is contained within the text message; retrieving text messages linked to the context identification number from a local directory in response to a context identification number being contained in the text message; and
displaying the received text message together with the retrieved text messages.

17. The method of claim 16, further comprising arranging the text messages linked to the context identification number in a temporal order of generation.

18. The method of claim 17, further comprising assigning a context tracking function icon to the text messages having the context identification number for distinguishing them from normal text messages.

19. The method of claim 18, further comprising displaying a party of the received text message in an inbound text message list with the contact tracking function icon.

20. The method of claim 17, further comprising displaying the received text message together with the text messages associated with sender's information contained within the received text message.

21. A mobile terminal comprising:
a radio frequency unit to support text message communication with other mobile terminals;
a memory unit to store application programs for operating functions of the mobile terminal, text messages exchanged with other mobile terminals, and configuration information of a context tracking function;
a control unit to assign a context identification number to an outbound text message and to track a text exchange context using a context identification number contained within an inbound text message.

22. The mobile terminal of claim 21, wherein the control unit determines, if an inbound text message has been received, whether a context identification number is contained within the received inbound text message and retrieves text messages linked to the context identification number of the received inbound text message from the memory unit.

23. The mobile terminal of claim 22, wherein the control unit controls the mobile terminal to display the received inbound text message together with the retrieved text messages.

24. The mobile terminal of claim 22, wherein the control unit controls the mobile terminal to generate the outbound text message in association with the context identification number of the received inbound text message.

25. The mobile terminal of claim 22, wherein the control unit comprises:
a tracking function controller to control operations of the context tracking function upon the context tracking function being on;
a tracking ID generator to generate the context tracking identification number and to insert the context tracking identification number into the outbound text message;
a tracking ID detector to detect the context tracking identification number by checking a predetermined region of the received inbound text message; and
a message tracker to track the text messages stored in the memory unit with reference to the context tracking identification number of the received inbound text message.

26. The mobile terminal of claim 25, wherein the tracking ID generator inserts a context tracking identification number contained in the received inbound text message into a last byte of the reply text message upon the outbound text message being a reply text message in response to the received inbound text message.

27. The mobile terminal of claim 25, wherein the tracking ID detector checks a last byte of a user data field of a packet data unit carrying the inbound text message.

28. The mobile terminal of claim 25, wherein the message tracker compares context tracking identification numbers of text messages stored in memory unit with the context tracking identification number of the inbound text message and retrieves the text messages having the same context tracking identification number as the inbound text message.

29. The mobile terminal of claim 25, wherein the message tracker retrieves at least one text message linked to the context tracking identification number of the inbound text message.

30. The mobile terminal of claim 21, wherein the memory unit comprises message storage to store outbound text messages assigned context identification numbers.

31. The mobile terminal of claim 21, wherein the context identification number is inserted into a last byte of a user data field of a packet data unit carrying the text message.

32. The mobile terminal of claim 28, wherein the context identification number is inserted in to a last byte of a user data field of a packet data unit carrying the text message.

33. The mobile terminal of claim 21, wherein the control unit attaches an icon to the text message having a context identification number to distinguish it from normal text messages.
